# EUROPÄISCHE PATENTSCHRIFT

(11) **EP 1 960 132 B1**
(45) Veröffentlichungstag und Bekanntmachung des Hinweises auf die Patenterteilung: **15.07.2009**
(21) Anmeldenummer: 07724393.9
(22) Anmeldetag: 20.04.2007
(51) Int. Cl.: B21B 15/00, B23K 11/087, B23K 37/04

(54) **VORRICHTUNG UND VERFAHREN ZUM VERBINDEN VON BÄNDERN**
APPARATUS AND METHOD FOR THE CONNECTION OF STRIPS
SYSTÈME ET METHODE D'ASSEMBLAGE DE BANDES

(30) Priorität: 27.04.2006 DE 102006020272; 30.11.2006 DE 102006056481
(43) Veröffentlichungstag der Anmeldung: 27.08.2008
(73) Patentinhaber: SMS Siemag AG, 40237 Düsseldorf (DE)
(72) Erfinder: SOHL, Ralf-Hartmut, 42699 Solingen (DE); DE KOCK, Peter, 46117 Oberhausen (DE); TOMZIG, Michael, 65795 Hattersheim (DE)
(74) Vertreter: Klüppel, Walter
(86) Internationale Anmeldenummer: PCT/EP2007/003456
(87) Internationale Veröffentlichungsnummer: WO 2007/124872

(56) Entgegenhaltungen:
- EP-A1- 0 845 309
- GB-A- 909 128
- US-A- 4 063 061
- US-A- 4 706 871

## Beschreibung

### Technisches Gebiet

Die Erfindung betrifft eine Vorrichtung und ein Verfahren zum Klemmen, Schneiden und Fügen von Bändern zu einem Endlosband.

### Stand der Technik

Bei der Bearbeitung von Metallbändern ist es zweckmäßig, wenn diese Bearbeitung kontinuierlich erfolgt, da dadurch keine Wechselzeiten zum Wechsel der zu bearbeitenden Werkstücke im Prozess aufgewendet werden müssen. Wenn die Werkstücke aber als Bleche endlicher Länge vorliegen, können diese vorteilhaft verbunden werden. Durch mehrfache Wiederholung einer derartigen Verbindung kann so ein sogenanntes "Endlosband" erzeugt werden. Das Endlosband wird dann in einer kontinuierlichen Bearbeitungsstraße (Conti-Straße) bearbeitet. Nach der Bearbeitung wird das Endlosband typischer Weise wieder in einzelne Bänder zerschnitten.

Im Stand der Technik sind Vorrichtungen für solche Fügeverfahren sehr aufwändig oder weisen beim Fügen nicht die nötige Präzision auf. Außerdem ist deren Handhabung sehr umständlich. Insbesondere sind bei diesen Vorrichtungen die Kanten der zu verbindenden Bleche nicht parallel zueinander oder die Fügeverbindung ist nicht zumindest im Wesentlichen eben.

Die US 4063061 offenbart eine Schweißvorrichtung zum Schweißen von Bändern mit den Merkmalen des Oberbegriffs des Anspruchs 1.

### Darstellung der Erfindung, Aufgabe, Lösung, Vorteil

Aufgabe der Erfindung ist es daher, eine Vorrichtung und ein Verfahren zu schaffen, mittels welcher bzw. welchem ein Endlosband aus Blechbändern einfach, schnell und mit hoher Güte erzeugt werden kann.

Dies wird hinsichtlich der Vorrichtung erfindungsgemäß erreicht durch eine Vorrichtung zum Klemmen, Schneiden und Fügen von Bändern zu einem Endlosband mit einer Klemmeinrichtung, einer Schneideeinrichtung und einer Fügeeinrichtung, wobei die Klemm-, Schneide- und Fügeeinrichtung miteinander kinematisch gekoppelt sind.

Dabei ist es vorteilhaft, wenn die Klemmeinrichtung eine obere und eine untere Bandklemme umfasst, die über Hebel steuerbar aufeinander zu oder voneinander weg bewegbar sind zum Einklemmen oder Freigeben von Bändern.

Dabei ist es besonders vorteilhaft, wenn die Schneideeinrichtung obere und untere Schneidmesser, wie Obermesser und Untermesser, umfasst, wobei die unteren Schneidmesser über Hebel steuerbar ein- oder ausfahrbar sind. Gemäß eines vorteilhaften Ausführungsbeispiels sind die unteren Schneidmesser, wie Untermesser, absenkbar. Dabei ist es bei zumindest einem Ausführungsbeispiel vorteilhaft, wenn die Schneideeinrichtung obere und untere Schneidmesser umfasst, wobei die oberen Schneidmesser, wie Obermesser, von oben zum Schnitt in Richtung auf die unteren Schneidmesser fahrbar oder bewegbar oder beaufschlagbar sind.

Gemäß eines weiteren vorteilhaften Aspekts der Erfindung sind nach dem Schnitt die geschnittenen Bandenden durch laterale Verschiebung der zumindest einen Klemmeinrichtung aufeinander zu bewegbar. Dabei kann es bei Vorhandensein von zwei gegenüberliegenden Klemmeinrichtungen vorteilhaft sein, wenn nur eine oder beide Klemmeinrichtungen lateral verschieblich sind.

Die Fügeeinrichtung kann vorteilhaft eine Schweißeinrichtung mit Schweißtisch umfassen.

Gemäß eines weiteren vorteilhaften Aspekts kann zur Stützung des Bandendes ein Schweißtisch an das ungestützte Bandende verfahren werden. Dabei ist es vorteilhaft, wenn der Schweißtisch zwei oder mehrteilig ist. Auch ist es vorteilhaft, wenn der Schweißtisch über Hebel und Betätigungselemente, wie Hydraulikzylinder, verlagerbar, wie verschwenkbar ist.

Dabei ist es besonders vorteilhaft, wenn der Schweißtisch an einer Mehrzahl von Stellen über die Breite der Bänder/des Bandes betrachtet mittels Hebeln an den/dem unteren Schneidmesser/n abgestützt ist.

Besonders zweckmäßig ist es, wenn die Absenkfunktion der unteren Schneidmesser für das Klemmen des Bandes nutzbar ist, indem der Schweißtisch an das Band beaufschlagbar ist.

Auch ist es zweckmäßig, wenn die Vorrichtung im Wesentlichen symmetrisch ausgebildet ist und zwei Klemmeinrichtungen, zwei Schneideeinrichtungen und zwei Fügeeinrichtungen aufweist. Diese liegen sich jeweils vorteilhaft spiegelsymmetrisch gegenüber.

Weiterhin ist es zweckmäßig, wenn zumindest eine der Klemmeinrichtungen eine Vorrichtung zum Höhenausgleich aufweist. Besonders vorteilhaft ist es, wenn beide Klemmeinrichtungen eine solche Vorrichtung zum Höhenausgleich aufweisen, so dass an beliebiger Seite ein Höhenausgleich vorgenommen werden kann.

Vorteilhaft ist, wenn die Vorrichtung zum Höhenausgleich eine Excenterverstellung aufweist.

Die erfindungsgemäße Aufgabe wird hinsichtlich des Verfahrens erfindungsgemäß erreicht durch ein Verfahren zum Betrieb einer Vorrichtung zum Klemmen, Schneiden und Fügen von Bändern zu einem Endlosband mit zumindest zwei Klemmeinrichtungen, einer Schneideeinrichtung und einer Fügeeinrichtung, wobei die Klemm-, Schneide- und Fügeeinrichtungen miteinander kinematisch gekoppelt sind, und wobei in einem ersten Schritt die Klemmeinrichtungen der Vorrichtung geöffnet werden um zwei Bandenden einzuführen. Dabei ist es vorteilhaft, wenn in einem nächsten Schritt die Bandenden mittels der Klemmeinrichtungen festgeklemmt werden. Weiterhin ist es zweckmäßig, wenn in einem nächsten Schritt die Bandenden mittels einer Schneideinrichtung oder Schneideinrichtungen geschnitten werden und in einem nächsten Schritt die geschnittenen Bandenden erneut positioniert werden. Darüber hinaus ist es vorteilhaft, wenn in einem weiteren Schritt eine Unterstützung der geschnittenen Bandenden nach dem Schneideprozess mittels eines vorteilhaft mehrteiligen, wie zweiteiligen, Schweißtisches erfolgt und in einem weiteren Schritt eine Höhenanpassung der beiden geschnittenen Bandenden erfolgt, damit Dickenunterschiede der zu fügenden Bänder ausgeglichen werden können, wobei in einem weiteren Schritt die Bandenden gefügt werden. Auch ist es vorteilhaft, wenn in einem nächsten Schritt die Klemmeinrichtung das gefügte Band wieder frei gibt.

Vorteilhafte Weiterbildungen sind in den Unteransprüchen beschrieben.

### Kurze Beschreibung der Zeichnungen

Nachstehend wird die Erfindung auf der Grundlage eines Ausführungsbeispiels anhand der Zeichnungen näher erläutert.

Es zeigen:
- Fig. 1: eine schematische Darstellung einer erfindungsgemäßen Vorrich- tung zum Fügen von Bändern;
- Fig. 2: eine schematische Darstellung einer erfindungsgemäßen Vorrich- tung zum Fügen von Bändern;
- Fig. 3: eine schematische Darstellung einer erfindungsgemäßen Vorrich- tung zum Fügen von Bändern;
- Fig. 4: eine schematische Darstellung einer erfindungsgemäßen Vorrich- tung zum Fügen von Bändern;
- Fig. 5: eine schematische Darstellung einer erfindungsgemäßen Vorrich- tung zum Fügen von Bändern;
- Fig. 6: eine schematische Darstellung einer erfindungsgemäßen Vorrich- tung zum Fügen von Bändern;
- Fig. 7: eine schematische Darstellung einer erfindungsgemäßen Vorrich- tung zum Fügen von Bändern;
- Fig. 8: eine schematische Darstellung einer erfindungsgemäßen Vorrich- tung zum Fügen von Bändern; und
- Fig. 9: ein Diagramm zum Ablauf eines erfindungsgemäßen Verfahrens.

### Bevorzugte Ausführung der Erfindung

Die erfindungsgemäße Vorrichtung und die Verfahrensschritte zum Verbinden der Einzelnbänder werden nachfolgend anhand der Figuren beschrieben. Dabei sind jeweils gleiche Bauelemente mit gleichen Bezugszeichen bezeichnet. Auch sind Elemente der Vorrichtung auf der rechten Seite mit -r und auf der linken Seite mit -l bezeichnet.

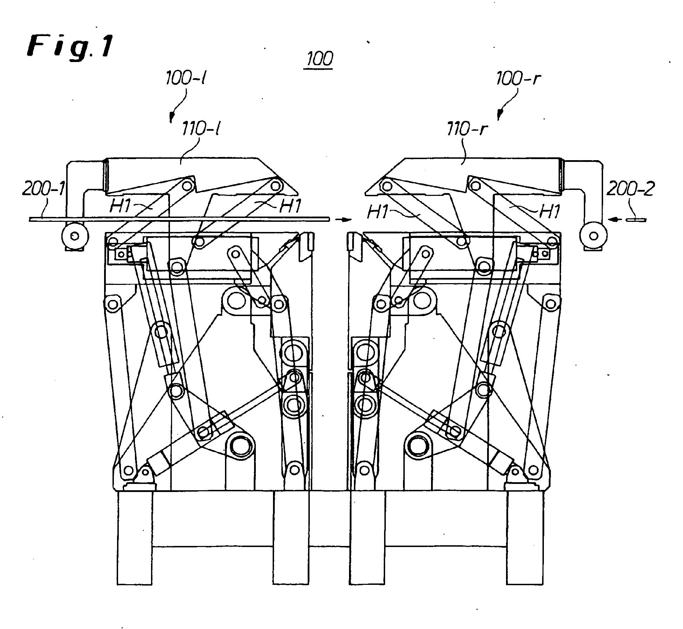

Die Fig. 1 zeigt die erfindungsgemäße Vorrichtung 100, welche einen rechten Teil 100-r und einen linken Teil 100-l der Vorrichtung 100 aufweist. Die beiden Teile der Vorrichtung sind im Wesentlichen spiegelsymmetrisch ausgebildet und grundsätzlich jeweils für die Handhabung eines der miteinander zu verbindenden Einzelbänder zuständig. So wird ein erstes Einzelband 200-1 von links in den linken Teil 100-l und ein zweites Einzelband 200-2 von rechts in den rechten Teil 100-r der Vorrichtung 100 eingeführt oder diesen zugeführt.

Zum Einführen der Bänder 200-1, 200-2 sind jeweils die oberen Bandklemmen 110-l, 110-r über parallelogrammartig angeordnete Hebel H1 nach oben in eine geöffnete Position geschwenkt.

Dabei weist die Vorrichtung 100 sowohl im rechten Teil 100-r als auch im linken Teil 100-l Bandklemmen 110 auf, die zum Greifen und Halten des Bandes bzw. des Einzelbandes 200-1, 200-2 geöffnet und geschlossen werden können. Die Bandklemmen 110 bestehen dabei jeweils aus zwei sich relativ zueinander verlagerbaren Bandklemmen 110-r, 110-l und 120-r und 120-l. Dabei ist die jeweils obere Bandklemme 110-r bzw. 110-l in Zusammenwirken mit der unteren Bandklemme 120-r bzw. 120-l. Die obere Bandklemme kann durch die Führung der parallelogrammartigen Hebel H1 derart verschwenkt werden, dass zwischen der oberen Bandklemme 110 und der unteren Bandklemme 120 ein Spalt oder Aufnahmebereich zur Aufnahme des Bandes entsteht, der durch das Zurückschwenken wieder geschlossen wird und das Band von den Bandklemmen 110,120 eingeklemmt und gehalten wird. Dabei bilden zumindest die oberen und die unteren Bandklemmen 110,120 eine Klemmeinrichtung 125 zum Einklemmen eines Bandes.

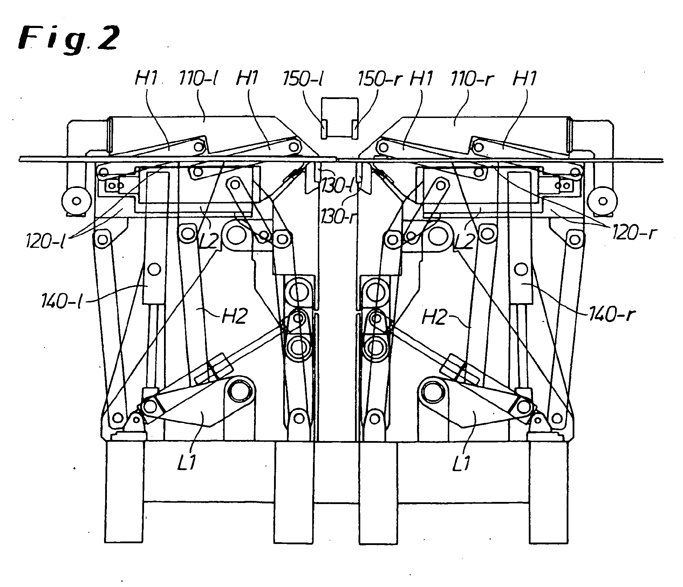

Wie in Fig. 2 ersichtlich, werden die beiden Einzelbänder 200-1 und 200-2 nach dem Öffnen der Bandklemmen 110,120 zunächst von rechts kommend und von links kommend in der Mitte der Vorrichtung 100 zusammen geschoben, so dass sie sich im Bereich zwischen den Bandklemmen berühren bzw. "auf Stoß" liegen. Die oberen Bandklemmen 110-r und 110-l werden dann in eine Schließposition abgesenkt, in welcher die beiden Einzelbänder 100-1 und 200-2 dann zwischen der oberen Bandklemme 110-r, 110-l und einer unteren Bandklemme 120-r und 120-l fest eingespannt sind.

Die oberen Bandklemmen 110-r und 110-l werden über die Hebelarme H1 in ihrer Schwenkbewegung geführt und die Antriebskraft für den Schwenkvorgang wird beispielsweise durch Hydraulikzylinder 140 aufgebracht. Das Öffnen und das Schließen der oberen Bandklemmen 110 wird dabei über Hydraulikzylinder 140-l und 140-r im Zusammenwirken mit den Laschen L1, L2 und den Hebeln H1, H2 bewerkstelligt, wobei zumindest die Hydraulikzylinder 140 vorzugsweise außen an der Vorrichtung angeordnet sind. Die Laschen L1 sind mit den Hydraulikzylindern 140 einseitig verbunden, wobei sie an ihrem anderen Ende schwenkbar an dem Lager LA1 gelagert sind. Mit der Lasche L1 sind die Hebel H2 an ihrem einen Ende schwenkbar verbunden, wobei die Hebel H2 an ihrem anderen Ende mit den Laschen L2 verschwenkbar verbunden sind. Die Laschen L2 sind wiederum mit den oberen Bandklemmen 110 verbunden. Wird nun der Hydraulikkolben bzw. -stempel des Hydraulikzylinders 140 angehoben oder ausgefahren, so verschwenkt die Lasche L1 nach oben und gleichzeitig schwenkt Hebel H2 nach oben und verschwenkt die Lasche L2 und die obere Bandklemme 110 nach oben.

Die Bänder liegen dann im mittigen Bereich gleichzeitig auf den Untermessern 130-l, 130-r auf. Im mittigen Bereich zwischen der linken und der rechten oberen Bandklemme 110-l, 110-r senken sich dann Obermesser 150-l, 150-r auf die beiden Bänder ab und schneiden im Zusammenwirken mit den Untermessern 130-l, 130-r deren jeweilige Enden ab. Nach dem Schneiden weisen die beiden neuen Enden der Bänder 200-1, 200-2 jeweils eine saubere und gerade Schnittkante auf, wobei die beiden Schnittkanten dann im Wesentlichen parallel zueinander ausgerichtet sind. Dabei bilden zumindest die oberen und die unteren Messer 130,150 eine Schneideeinrichtung 155 zum Schneiden eines Bandes.

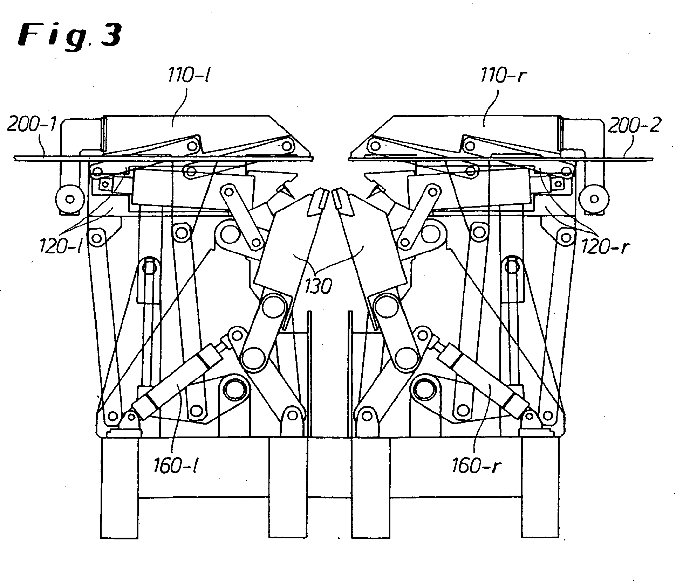

Wie in Figur 3 gezeigt ist, werden die beiden Untermesser 130-l, 130-r mit ihren Messerträgern 130 nach dem Schneidevorgang mit Hilfe von Hydraulikzylindern 160-l, 160-r nach unten weggeschwenkt. Die beiden Bänder 200-1 und 200-2 bleiben dabei nach wie vor zwischen den oberen und unteren Bandklemmen 110, 120 eingeklemmt. Das Wegschwenken der Messerträger 130 mit den Untermessern 130-l, 130-r wird vorteilhafter Weise gleichzeitig zum Einklemmen der Bänder genutzt.

Wie in Figur 3 weiterhin zu erkennen ist, sind die Messerträger 130 über Hebel 131-l, 131-r an den Hydraulikzylindern 160-l, 160-r angelenkt, so dass durch Ansteuerung des Hydraulikkolbens des Hydraulikzylinders eine Verstellung der Neigung und somit der Position der Messer 130-l, 130-r erfolgt.

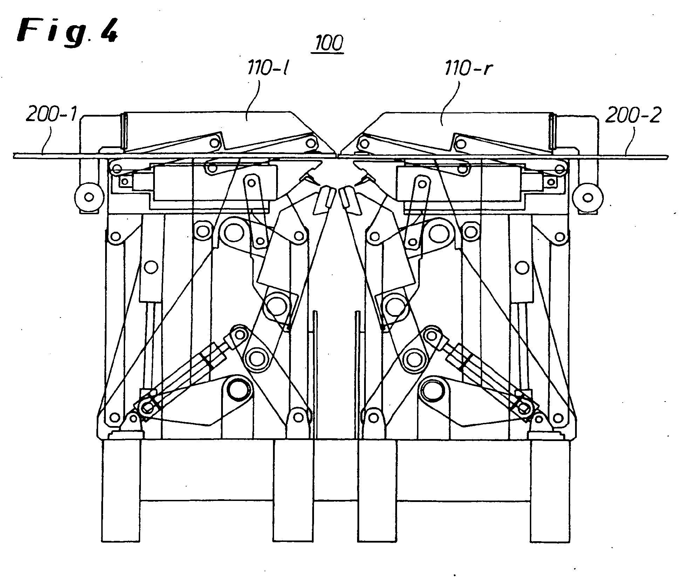

Die Figur 4 zeigt, dass die rechten und linken oberen und unteren Bandklemmen 110, 120 zusammen mit den beiden immer noch eingespannten Bändern 200-1, 200-2 zur Mitte der Vorrichtung 100 hin aufeinander zu bewegt werden, um die beiden abgeschnittenen Bandenden in einer Fügestelle F zusammenzuführen. Dieses Zusammenführen erfolgt durch Verschwenken der Traghebelarme THA, die die Bandklemmen tragen. Nach dem Zusammenführen sind die Bänder 200-1, 200-2 dann allerdings zunächst an der Fügestelle F nicht mehr abgestützt.

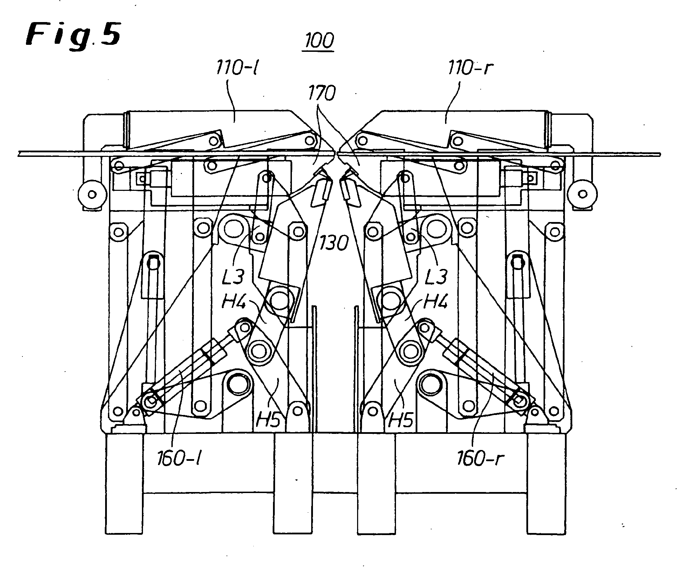

Zum Abstützen der Bänder 200-1, 200-2 an der Fügestelle wird dann gemäß Figur 5 ein linker und ein rechter Schweißtisch 170-l, 170-r von unten gegen die Bandenden gefahren. Die Schweißtische 170-l, 170-r stützen sich dabei mit mehreren über die Breite der Vorrichtung bzw. der Bänder verteilt angeordneten Laschen L3 an den weggeschwenkten Messerträgern 130 ab. Dadurch wird ein unzulässiges Durchbiegen der Schweißtische über der Breite verhindert.

Gemäß Figur 5 werden die Schweißtische 170-l, 170-r durch ein Wiederanstellen der Messerträger mit den Untermessern über Kniehebel H4, H5 und die Hydraulikzylinder 160-l, 160-r von unten gegen die Bandenden angestellt, und auf diese Weise werden auch die Bandenden zum Verschweißen fest zwischen obere Bandklemme und Schweißtisch eingespannt. Zum Wiederanstellen der Messerträger 130 sind die Hydraulikzylinder 160 gemäß Figur 5 im Vergleich zu Fig. 4 etwas mehr aufgestellt.

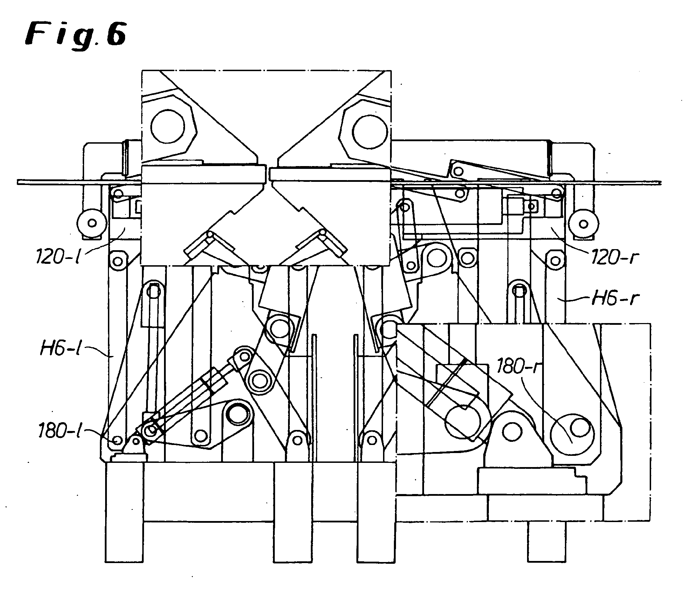

Gemäß Figur 6 erfolgt vor dem Verschweißen der Bandenden, insbesondere bei unterschiedlich dicken Bändern ein Höhenausgleich in der Weise, dass die beiden Bandenden in der Höhe zentrisch zueinander positioniert und fixiert werden; anders ausgedrückt werden die Bänder auf neutraler Achse gefügt. Die so eingestellte Position der Bandenden zueinander repräsentiert die eigentliche Schweißposition. Die Höhenanpassung erfolgt mit Hilfe einer Excentereinrichtung umfassend einen Excenter 180-r, 180-l und einen Hebel H6-r, H6-l, welcher den Excenter mit der unteren Bandklemme 120-r, 120-1 verbindet. Vorteilhaft ist die Excentereinrichtung beidseitig angeordnet, sowohl links als auch rechts. Erfindungsgemäß kann die Excentereinrichtung jedoch auch nur an einer Seite angeordnet sein.

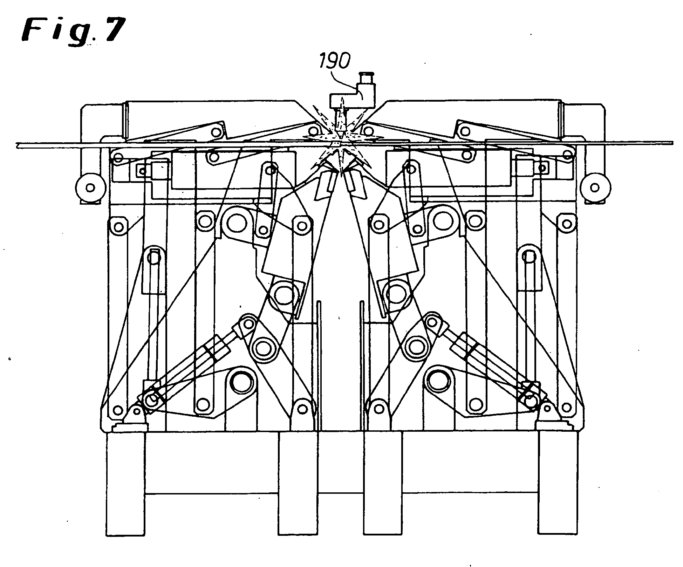

In der Schweißposition werden die Bandenden dann mittels einer Fügeeinrichtung 195 gefügt. Vorteilhaft kann die Fügeeinrichtung dann gemäß Fig. 7 eine Schweißeinrichtung 190 sein, die beispielsweise von oben über der Schweißposition absenkbar ist und die Bandenden miteinander verschweißt. Die Schweißeinrichtung kann dazu vorteilhaft abgesenkt oder positioniert werden.

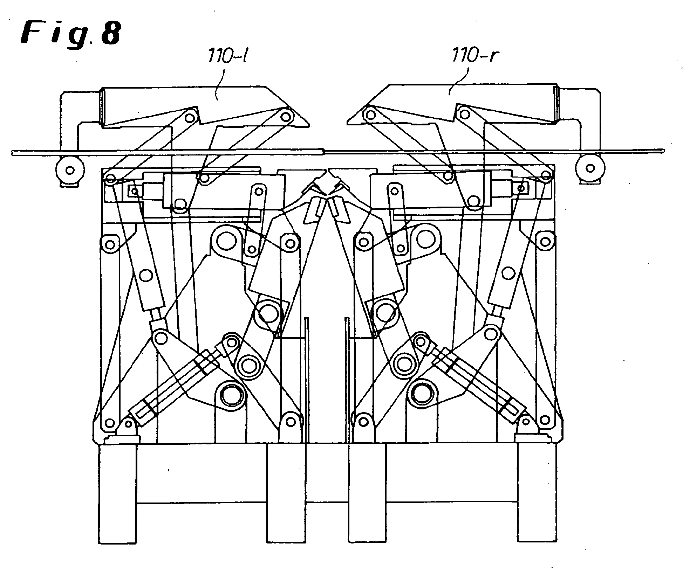

Nach durchgeführtem Schweißvorgang wird das dann aus den beiden Bändern zusammengeschweißte "Endlosband" gemäß Fig. 8 aus seiner Einspannung entlassen, indem insbesondere die beiden oberen Bandklemmen 110-l, 110-r wieder nach oben in ihre Öffnungsposition schwenken. Das Endlosband steht dann für eine kontinuierliche Bearbeitung in einer Conti-Anlage zur Verfügung.

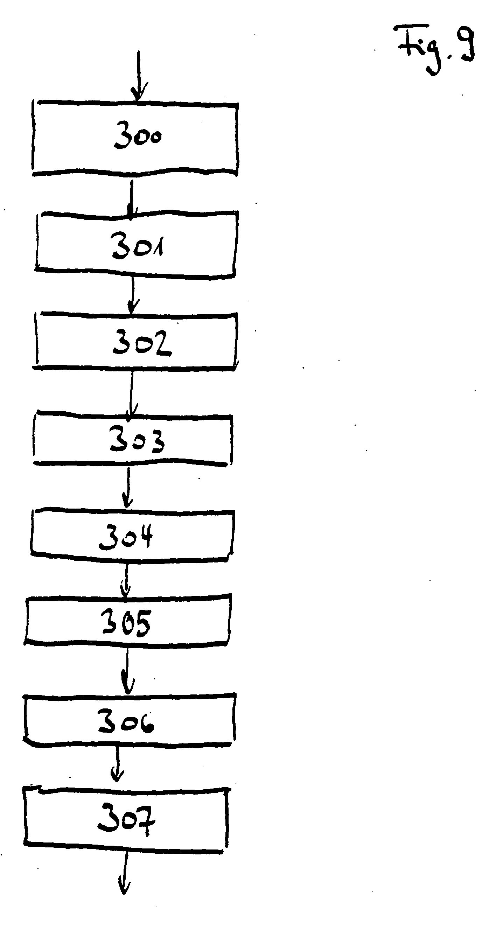

Die Vorrichtung 100 erlaubt gemäß der obigen Beschreibung ein mehrstufiges Verfahren zum Klemmen, Schneiden und Fügen von Bändern zu einem sogenannten Endlosband, wie es in dem Diagramm der Figur 9 schematisch dargestellt ist. Im ersten Schritt 300 wird die Klemmeinrichtung 110,120 der Vorrichtung 100 geöffnet um zwei Bandenden einzuführen. Anschließend werden im nächsten Schritt 301 die Bandenden festgeklemmt um die Bandenden im nächsten Schritt 302 zu schneiden. Danach werden in einem nächsten Schritt 303 die geschnittenen Bandenden erneut positioniert (Schritt 304) und anschließend an der Fügestelle unterstützt (Schritt 305) und dann im nächsten Schritt 306 gefügt, bevor die Klemmeinrichtung im letzten Schritt 307 das Band wieder frei gibt.

Die Unterstützung der Bandenden nach dem Schneideprozess und die erneute Positionierung erfolgt vorteilhaft mittels eines mehrteiligen, wie zweiteiligen, Schweißtisches, welcher von unten gegen das Band im Endbereich oder das Bandende angehoben wird.

Weiterhin kann auch vor dem Fügen noch eine Höhenanpassung erfolgen, damit Dickenunterschiede der zu fügenden Bänder ausgeglichen werden können. Dies erfolgt beispielsweise mittels einer Excentervorrichtung.

### Bezugszeichenliste

- 100: Vorrichtung
- 100-r, 100-l: rechter und linker Teil der Vorrichtung
- 110: obere Bandklemme
- 110-l, 110-r: obere Bandklemme
- 120: untere Bandklemme
- 120-l, 120-r: untere Bandklemme
- 125: Klemmeinrichtung
- 130: Messerträger Untermesser
- 130-l, 130-r: Untermesser
- 131-l, 131-r: Hebel
- 140: Hydraulikzylinder
- 140-l, 140-r: Hydraulikzylinder
- 150: Obermesser
- 150-l, 150-r: Obermesser
- 155: Schneideeinrichtung
- 160: Hydraulikzylinder
- 160-l, 160-r: Hydraulikzylinder
- 170: Schweißtisch
- 170-l, 170-r: Schweißtisch
- 180: Excenter
- 180-l, 180-r: Excenter
- 190: Schweißeinrichtung
- 195: Fügeeinrichtung
- 200: Band
- 200-1: Einzelband
- 200-2: Einzelband
- 300: Schritt
- 301: Schritt
- 302: Schritt
- 303: Schritt
- 304: Schritt
- 305: Schritt
- 306: Schritt
- 307: Schritt
- H1: Hebel
- H2: Hebel
- H4: Kniehebel
- H5: Kniehebel
- H6-r, H6-l: Hebel
- L1: Lasche
- L2: Lasche
- L3: Lasche
- LA1: Lager
- THA: Traghebelarme
- F: Fügestelle

## Patentansprüche

1. Vorrichtung (100) zum Klemmen, Schneiden und Fügen von Bändern zu einem Endlosband mit einer Klemmeinrichtung (125), einer Schneideeinrichtung (155) und einer Fügeeinrichtung (195),
**dadurch gekennzeichnet,**
**dass** die Klemm-, Schneide- und Fügeeinrichtung (125,155,195) miteinander kinematisch gekoppelt sind.

2. Vorrichtung nach Anspruch 1,
**dadurch gekennzeichnet,**
**dass** die Klemmeinrichtung (125) eine obere und eine untere Bandklemme (110,120) umfasst, die über Hebel (H1,H2,L1,L2) steuerbar aufeinander zu oder voneinander weg bewegbar sind zum Einklemmen oder Freigeben von Bändern (200).

3. Vorrichtung nach Anspruch 1 oder 2,
**dadurch gekennzeichnet,**
**dass** die Schneideeinrichtung (155) obere und untere Schneidmesser (130-l,130-r,150-l,150-r), wie Obermesser und Untermesser, umfasst, wobei die unteren Schneidmesser (130-l,130-r) über Hebel (131) steuerbar ein- oder ausfahrbar sind.

4. Vorrichtung nach Anspruch 3,
**dadurch gekennzeichnet,**
**dass** die unteren Schneidmesser (130-l,130-r) absenkbar sind.

5. Vorrichtung nach Anspruch 3 oder 4,
**dadurch gekennzeichnet,**
**dass** die Schneideeinrichtung (155) obere und untere Schneidmesser (130-l,130-r,150-l,150-r) umfasst, wobei die oberen Schneidmesser (150-l, 150-r) von oben zum Schnitt in Richtung auf die unteren Schneidmesser (130-l, 130-r) fahrbar sind.

6. Vorrichtung nach einem der vorhergehenden Ansprüche,
**dadurch gekennzeichnet,**
**dass** nach dem Schnitt die geschnittenen Bandenden durch laterale Verschiebung der entsprechenden Klemmeinrichtung (125) aufeinander zu bewegbar sind.

7. Vorrichtung nach Anspruch 6,
**dadurch gekennzeichnet,**
**dass** zur Stützung der Bandenden zumindest ein Schweißtisch (170) an die ungestützten Bandenden verfahrbar ist.

8. Vorrichtung nach Anspruch 7,
**dadurch gekennzeichnet,**
**dass** der zumindest eine Schweißtisch (170) zwei oder mehrteilig ausgebildet ist.

9. Vorrichtung nach Anspruch 7 oder 8,
**dadurch gekennzeichnet,**
**dass** der Schweißtisch (170) an einer Mehrzahl von Stellen über die Breite der Bänder betrachtet mittels Hebeln (L3) an den unteren Schneidmessern (130) abgestützt ist.

10. Vorrichtung nach Anspruch 7 oder 8,
**dadurch gekennzeichnet,**
**dass** die Absenkfunktion der unteren Schneidmesser (130) für das Klemmen des Bandes nutzbar ist.

11. Vorrichtung nach einem der vorhergehenden Ansprüche,
**dadurch gekennzeichnet,**
**dass** die Vorrichtung (100) im Wesentlichen symmetrisch ausgebildet ist und zwei Klemmeinrichtungen (125), zwei Schneideeinrichtungen (155) und zumindest eine oder zwei Fügeeinrichtungen (195) aufweist.

12. Vorrichtung nach Anspruch 11,
**dadurch gekennzeichnet,**
**dass** zumindest eine der Klemmeinrichtungen (125) eine Vorrichtung zum Höhenausgleich aufweist.

13. Vorrichtung nach Anspruch 12,
**dadurch gekennzeichnet,**
**dass** die Vorrichtung zum Höhenausgleich eine Excenterverstellung aufweist.

14. Verfahren zum Betrieb einer Vorrichtung (100) zum Klemmen, Schneiden und Fügen von Bändern zu einem Endlosband mit zumindest zwei Klemmeinrichtungen (125), einer Schneideeinrichtung (155) und einer Fügeeinrichtung (195) nach einem der vorhergehenden Ansprüche 1 bis 13,
**dadurch gekennzeichnet,**
**dass** in einem ersten Schritt die Klemmeinrichtungen (125) der Vorrichtung geöffnet werden um zwei Bandenden einzuführen.

15. Verfahren nach Anspruch 14,
**dadurch gekennzeichnet,**
**dass** in einem nächsten Schritt die Bandenden mittels der Klemmeinrichtungen (125) fest geklemmt werden.

16. Verfahren nach Anspruch15,
**dadurch gekennzeichnet,**
**dass** in einem nächsten Schritt die Bandenden mittels zumindest einer Schneideinrichtung (155) geschnitten werden.

17. Verfahren nach Anspruch 16,
**dadurch gekennzeichnet,**
**dass** in einem nächsten Schritt die geschnittenen Bandenden erneut positioniert werden.

18. Verfahren nach Anspruch 16,
**dadurch gekennzeichnet,**
**dass** in einem Schritt eine Unterstützung der geschnittenen Bandenden nach dem Schneideprozess mittels zumindest eines mehrteiligen, wie zweiteiligen, Schweißtisches (170) erfolgt.

19. Verfahren nach Anspruch 16,
**dadurch gekennzeichnet,**
**dass** in einem Schritt eine Höhenanpassung der beiden geschnittenen Bandenden erfolgt, damit Dickenunterschiede der zu fügenden Bänder ausgeglichen werden können.

20. Verfahren nach Anspruch 16,
**dadurch gekennzeichnet,**
**dass** in einem Schritt die Bandenden gefügt werden.

21. Verfahren nach Anspruch 20,
**dadurch gekennzeichnet,**
**dass** in einem nächsten Schritt die Klemmeinrichtung (125) das gefügte Band wieder frei gibt.

## Claims

1. Device (100) for clamping, cutting and joining strips to form an endless strip, with a clamping arrangement (125), a cutting arrangement (155) and a joining arrangement (195), **characterised in that** the clamping, cutting, and joining arrangements (125, 155, 195) are kinematically coupled with one another.

2. Device according to claim 1, **characterised in that** the clamping arrangement (125) comprises an upper and a lower strip clamp (110, 120, which is controllable by way of levers (H1, H2, L1, L2) to be movable towards or away from each other in order to clamp or release strips (200).

3. Device according to claim 1 or claim 2, **characterised in that** the cutting arrangement (155) comprises upper and lower cutting knives (130-l, 130-r, 150-l, 150-r), such as upper knives and lower knives, wherein the lower cutting knives (130-l, 130-r) are controllable by way of levers (131) to be movable in or out.

4. Device according to claim 3 or claim 4, **characterised in that** the lower cutting knives (130-l, 130-r) can be lowered.

5. Device according to claim 3 or claim 4, **characterised in that** the cutting arrangement (155) comprises upper and lower cutting knives (130-l, 130-r, 150-l, 150-r), wherein the upper cutting knives (150-l, 150-r) are movable from above in the direction of the lower cutting knives (130-l, 130-r) to make the cut.

6. Device according to any one of the preceding claims, **characterised in that** after the cut has been made the cut strip ends are movable towards each other by lateral displacement of the corresponding clamping arrangement (125).

7. Device according to claim 6, **characterised in that** to support the strip ends at least one welding table (170) is movable to the unsupported strip ends.

8. Device according to claim 7, **characterised in that** at least one welding table (170) is of two-part or multi-part construction.

9. Device according to claim 7 or claim 8, **characterised in that** the welding table (170) is supported in a plurality of places, as viewed over the width of the strips, on the lower cutting knives (130) by means of levers (L3).

10. Device according to claims 7 or claim 8, **characterised in that** the lowering function of the lower cutting knives (130) can be used for clamping the strip.

11. Device according to any one of the preceding claims, **characterised in that** the device (100) is of substantially symmetrical construction and has two clamping arrangements (125), two cutting arrangements (155) and at least one or two joining arrangements (195).

12. Device according to claim 11, **characterised in that** at least one of the clamping arrangements (125) has a device for height compensation.

13. Device according to claim 12, **characterised in that** the device for height compensation comprises an eccentric adjustment mechanism.

14. Method for operating a device (100) for clamping, cutting and joining strips to form an endless strip, with at least two clamping arrangements (125), a cutting arrangement (155) and a joining arrangement (195), according to any one of the preceding claims 1 to 13, **characterised in that** in a first step the clamping arrangement (125) of the device (100) are opened to allow two strip ends to be inserted.

15. Method according to claim 14, **characterised in that** in a next step the strip ends are firmly clamped by means of the clamping arrangements (125).

16. Method according to claim 14 or claim 15, **characterised in that** in a next step the strip ends are cut by means of at least one cutting arrangement (155).

17. Method according to claim 16, **characterised in that** in a next step the cut strip ends are repositioned.

18. Method according to claim 16, **characterised in that** in a step a support of the cut strip ends is carried out after the cutting process by means of at least one multi-part, such as two-part, welding table (170).

19. Method according to claim 16, **characterised in that** in a step a height adaptation of the two cut strip ends is carried out so that compensation for thickness differences of the strips to be joined can be provided.

20. Method according to claim 16, **characterised in that** in a step the strip ends are joined.

21. Method according to claim 20, **characterised in that** in a next step the clamping arrangement (125) releases the joined strip again.

## Revendications

1. Dispositif (100) pour serrer, découper et assembler des bandes en une bande sans fin, présentant un dispositif de serrage (125), un dispositif de découpe (155) et un dispositif d'assemblage (195), **caractérisé**
**en ce que** les dispositifs de serrage, de découpe et d'assemblage (125,155,195) sont couplés de manière cinématique les uns aux autres.

2. Dispositif selon la revendication 1, **caractérisé**
**en ce que** le dispositif de serrage (125) comprend une pince à bande (110,120) inférieure et supérieure, qui peuvent être déplacées de manière contrôlée l'une vers l'autre ou l'une en s'écartant de l'autre via des leviers (H1,H2,L1,L2) en vue du serrage ou de la libération de bandes (200).

3. Dispositif selon la revendication 1 ou 2, **caractérisé**
**en ce que** le dispositif de découpe (155) comprend des couteaux (130-l,130-r,150-l,150-r) inférieurs et supérieurs, par exemple des lames supérieures et des lames inférieures, les couteaux inférieurs (130-l,130-r) pouvant être mis en place ou écartés de manière contrôlée via des leviers (131).

4. Dispositif selon la revendication 3, **caractérisé**
**en ce que** les couteaux inférieurs (130-l, 130-r) peuvent être abaissés.

5. Dispositif selon la revendication 3 ou 4, **caractérisé**
**en ce que** le dispositif de découpe (155) comprend des couteaux supérieurs et inférieurs (130-l,130-r,150-l,150-r), les couteaux supérieurs (150-l, 150-r) pouvant être déplacés à partir du dessus, en vue de la découpe, vers les couteaux inférieurs (130-l, 130-r).

6. Dispositif selon l'une quelconque des revendications précédentes,
**caractérisé**
**en ce que**, après la découpe, les extrémités coupées des bandes peuvent être déplacées l'une vers l'autre par un déplacement latéral du dispositif de serrage (125) correspondant.

7. Dispositif selon la revendication 6, **caractérisé**
**en ce que**, pour le support des extrémités des bandes, au moins une table de soudage (170) peut être déplacée au niveau des extrémités des bandes non supportées.

8. Dispositif selon la revendication 7, **caractérisé**
**en ce qu'**au moins une table de soudage (170) est réalisée en deux plusieurs parties ou plus.

9. Dispositif selon la revendication 7 ou 8, **caractérisé**
**en ce que** la table de soudage (170) est supportée en une multitude d'endroits, répartis sur la largeur des bandes, au moyen de leviers (L3) au niveau des couteaux inférieurs (130).

10. Dispositif selon la revendication 7 ou 8, **caractérisé**
**en ce que** la fonction d'abaissement des couteaux inférieurs (130) peut être exploitée pour le serrage de la bande.

11. Dispositif selon l'une quelconque des revendications précédentes,
**caractérisé**
**en ce que** le dispositif (100) présente une réalisation essentiellement symétrique et présente deux dispositifs de serrage (125), deux dispositifs de découpe (155) et au moins un ou deux dispositifs d'assemblage (195).

12. Dispositif selon la revendication 11, **caractérisé**
**en ce qu'**au moins un des dispositifs de serrage (125) présente un dispositif pour la compensation de la hauteur.

13. Dispositif selon la revendication 12, **caractérisé**
**en ce que** le dispositif pour la compensation de la hauteur présente un réglage excentrique.

14. Procédé pour le fonctionnement d'un dispositif (100) pour serrer, découper et assembler des bandes en une bande sans fin présentant au moins deux dispositifs de serrage (125), un dispositif de découpe (155) et un dispositif d'assemblage (195), selon l'une quelconque des revendications 1 à 13,
**caractérisé**
**en ce que**, dans une première étape, les dispositifs de serrage (125) du dispositif sont ouverts pour introduire deux extrémités de bandes.

15. Procédé selon la revendication 14, **caractérisé**
**en ce que** dans une étape suivante, les extrémités des bandes sont enserrées au niveau des dispositifs de serrage (125).

16. Procédé selon la revendication 15, **caractérisé**
**en ce que** dans une étape suivante, les extrémités des bandes sont coupées au moyen d'au moins un dispositif de découpe (155).

17. Procédé selon la revendication 16, **caractérisé**
**en ce que** dans une étape suivante, les extrémités découpées des bandes sont repositionnées.

18. Procédé selon la revendication 16, **caractérisé**
**en ce que** dans une étape est réalisé un support des extrémités découpées des bandes après le processus de découpe au moyen d'au moins une table de soudage (170) en plusieurs parties, par exemple en deux parties.

19. Procédé selon la revendication 16, **caractérisé**
**en ce que** dans une étape est réalisée une adaptation de la hauteur des deux extrémités découpées des bandes, afin que les différences d'épaisseur des bandes à assembler puissent être compensées.

20. Procédé selon la revendication 16, **caractérisé**
**en ce que** dans une étape, les extrémités des bandes sont assemblées.

21. Procédé selon la revendication 20, **caractérisé**
**en ce que** dans une étape suivante, le dispositif de serrage (125) libère à nouveau la bande assemblée.
